(19)

Europäisches
Patentamt

European
Patent Office

Office européen
des brevets

(11) **EP 4 589 677 A1**

(12) **EUROPEAN PATENT APPLICATION**
published in accordance with Art. 153(4) EPC

(43) Date of publication:
**23.07.2025 Bulletin 2025/30**

(21) Application number: **23907748.0**

(22) Date of filing: **20.12.2023**

(51) International Patent Classification (IPC):
*H01M 4/131* (2010.01)  *H01M 4/66* (2006.01)
*H01M 4/525* (2010.01)  *H01M 4/505* (2010.01)
*H01M 10/052* (2010.01)  *H01M 50/107* (2021.01)
*H01M 4/04* (2006.01)  *H01M 4/1391* (2010.01)
*H01M 4/02* (2006.01)

(52) Cooperative Patent Classification (CPC):
**H01M 4/02; H01M 4/04; H01M 4/131;
H01M 4/1391; H01M 4/505; H01M 4/525;
H01M 4/66; H01M 10/052; H01M 50/107**

(86) International application number:
**PCT/KR2023/021141**

(87) International publication number:
**WO 2024/136465 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.12.2022 KR 20220179921
02.01.2023 KR 20230000449
19.12.2023 KR 20230186388**

(71) Applicant: **LG Energy Solution, Ltd.
Seoul 07335 (KR)**

(72) Inventors:
• **LEE, Yun Ju
Daejeon 34122 (KR)**

• **JANG, Jin Su
Daejeon 34122 (KR)**
• **JEGAL, Jong Pil
Daejeon 34122 (KR)**
• **PARK, Geun Ho
Daejeon 34122 (KR)**
• **PARK, Sung Kwan
Daejeon 34122 (KR)**
• **SONG, Su Bin
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **POSITIVE ELECTRODE AND LITHIUM SECONDARY BATTERY COMPRISING SAME**

(57)    The present invention provides a positive electrode for a lithium secondary battery, including: a positive electrode current collector; and a positive electrode active material layer located on the positive electrode current collector, wherein the positive electrode current collector includes a coated portion having a positive electrode active material layer formed on at least one surface thereof and a non-coated portion having no positive electrode active material layer formed on the positive electrode current collector, and satisfies Equation (1) below:

$$\text{Equation (1)} : P \geq [(a1/a2) \times b]/0.05c$$

wherein P is a rolling density (g/cc) of the positive electrode, a1 is a $D_{50}$ ($\mu$m) of positive electrode active material particles included in the positive electrode active material layer, a2 is a $D_{max}$ ($\mu$m) of positive electrode active material particles included in the positive electrode active material layer, b is an elongation (%) of the positive electrode current collector at 25°C, and c is a thickness ($\mu$m) of the positive electrode current collector.

EP 4 589 677 A1

## Description

**[Technical Field]**

<u>CROSS-REFERENCE TO RELATED APPLICATION</u>
This application claims the benefit of priority to Korean Patent Application No. 10-2022-0179921 filed on December 20, 2022, the disclosure of which is incorporated herein by reference in its entirety.

[Technical Field]

The present invention relates to a positive electrode and a lithium secondary battery including the same.

**[Background Art]**

With the development of technology for electric vehicles, portable electronic devices, and the like, the demand for lithium secondary batteries as an energy source is rapidly increasing.
The lithium secondary batteries can be classified into cylindrical, prismatic, and pouch-type batteries according to the battery case type. Among them, the cylindrical battery has a form in which an electrode assembly is accommodated in a cylindrical battery can and then sealed by covering the top of the battery can with a cap plate, wherein the electrode assembly is manufactured by sequentially stacking a sheet-shaped positive electrode, a separator, and a negative electrode and then winding them in one direction. The positive electrode and the negative electrode are provided with a positive electrode tab and a negative electrode tab having a strip shape, respectively, wherein the positive electrode tab and the negative electrode tab are connected to an electrode terminal to be electrically connected to an external power source. For reference, the positive electrode terminal is a cap plate, and the negative electrode terminal is a battery can. However, in the case of a conventional cylindrical battery having such a structure, there is a problem in that current is concentrated on the strip-shaped electrode tab, so that resistance is large, a lot of heat is generated, and current collecting efficiency is not good.
In this case, by applying a structure in which non-coated portions of the positive electrode and the negative electrode serve as the electrode tabs without forming separate electrode tabs (for example, a tab-less structure), it is possible to solve the problem that current is concentrated around the electrode tabs.
However, in the case of the electrode having a coated portion and a non-coated portion, there is a problem that a camber phenomenon occurs in which the electrode is bent toward the non-coated portion as a swell of the electrode is caused due to a difference in elongation between the coated portion and the non-coated portion during the rolling process.
If the camber phenomenon becomes severe, the tip of the electrode is bent when the electrode assembly is wound, causing a meandering defect, which prevents the electrode assembly from being laminated at a correct position. If the electrode assembly is not laminated at a correct position, a short circuit may occur internally because the non-coated portion of the positive electrode contacts the active material of the negative electrode, the non-coated portion of the negative electrode contacts the active material of the positive electrode, and the non-coated portion of the positive electrode contacts the non-coated portion of the negative electrode.
In addition, the particle dimpling phenomenon occurs differently in the positive electrode current collector depending on the size of the positive electrode active material particles included in the positive electrode active material layer of the coated portion, resulting in the problem of disconnection of the positive electrode current collector (current collector breakage phenomenon).
It was difficult to solve the problem of disconnection caused by the positive electrode active material simply by adjusting the thickness and elongation of the current collector.
Accordingly, there is a need for a technology that suppresses the camber phenomenon to solve disconnection occurring in the manufacturing process while preventing disconnection from occurring even during charging and discharging.

**[Disclosure]**

**[Technical Problem]**

The present invention is for solving both problems of the camber phenomenon and the disconnection phenomenon in the positive electrode including a coated portion and a non-coated portion, and seeks to solve the above problem by adjusting a rolling density of a positive electrode, a particle size of a positive electrode active material, a thickness of a positive electrode current collector, and an elongation of a positive electrode current collector to satisfy a specific relationship.

[Technical Solution]

The present invention provides a positive electrode for a lithium secondary battery, including: a positive electrode current collector; and a positive electrode active material layer located on the positive electrode current collector, wherein the positive electrode current collector includes a coated portion having a positive electrode active material layer formed on at least one surface thereof and a non-coated portion having no positive electrode active material layer formed on the positive electrode current collector, and satisfies Equation (1) below:

$$\text{Equation (1)} : P \geq [(a1/a2) \times b]/0.05c$$

wherein P is a rolling density (g/cc) of the positive electrode, a1 is a $D_{50}$ (μm) of positive electrode active material particles included in the positive electrode active material layer, a2 is a $D_{max}$ (μm) of positive electrode active material particles included in the positive electrode active material layer, b is an elongation (%) of the positive electrode current collector at 25°C, and c is a thickness (μm) of the positive electrode current collector.

In addition, the present invention provides a lithium secondary battery including: an electrode assembly in which a positive electrode for a lithium secondary battery, a negative electrode, and a separator interposed between the positive electrode and the negative electrode is wound in one direction; an electrolyte; and a battery can accommodating the electrode assembly and the electrolyte.

[Advantageous Effects]

In the positive electrode in which the coated portion and the non-coated portion are formed, a swell of the electrode is generated due to a difference in elongation between the coated portion and the non-coated portion during the rolling process. When the positive electrode having the electrode swell is straightened in order to manufacture the electrode assembly, the positive electrode is bent toward the non-coated portion, and the degree of bending is increased at the end (tip) of the positive electrode to form a camber. If the camber phenomenon becomes severe, disconnection may occur during the manufacturing process, and cracks may increase during long-term driving, thereby deteriorating life characteristics.

In addition, the particle dimpling phenomenon occurs differently in the positive electrode current collector depending on the size of the positive electrode active material particles included in the positive electrode active material layer of the coated portion, resulting in the disconnection of the positive electrode current collector.

The present invention can provide a positive electrode in which the camber phenomenon is suppressed by adjusting a rolling density of the positive electrode, a particle size of the positive electrode active material, a thickness of the positive electrode current collector, and an elongation of the positive electrode current collector to satisfy a specific relationship. Therefore, the positive electrode for a lithium secondary battery according to the present invention has an effect that the camber phenomenon is suppressed, thereby not causing a disconnection problem during the manufacturing process and even during charging and discharging.

In addition, the lithium secondary battery including the positive electrode has fewer defects due to disconnection and has excellent durability.

[Best Modes of the Invention]

Hereinafter, the present invention will be described in more detail.

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

In the present disclosure, a "primary particle" refers to a particle unit in which a grain boundary does not exist in appearance when observed at a field of view of 5,000 to 20,000 times using a scanning electron microscope. An "average particle diameter of the primary particle" means an arithmetic average value calculated by measuring the particle diameters of the primary particles observed in the scanning electron microscope image.

In the present disclosure, a "secondary particle" refers to a particle formed by agglomerating a plurality of primary particles. In the present disclosure, a secondary particle in which 10 or less primary particles are aggregated will be referred to as a quasi-single particle so as to distinguish it from a conventional secondary particle formed by aggregating tens to hundreds of primary particles.

In the present disclosure, a "$D_{50}$" refers to a particle size based on 50% of a volume cumulative particle size distribution of a positive electrode active material powder, can be measured using a laser diffraction method. For example, the positive electrode active material powder is dispersed in a dispersion medium, and then introduced into a commercially available laser diffraction particle size measurement device (e.g., Microtrac MT 3000) and irradiated with an ultrasonic wave of about 28 kHz with an output of 60 W. Thereafter, it can be determined by obtaining a volume cumulative particle size distribution graph, and then obtaining a particle size corresponding to 50% of the volume cumulative amount.

In the present disclosure, a "$D_{max}$" refers to a maximum particle diameter in a volume cumulative particle size distribution of a positive electrode active material powder, and can be measured using a laser diffraction method. For example, the positive electrode active material powder is dispersed in a dispersion medium, and then introduced into a commercially available laser diffraction particle size measurement device (e.g., Microtrac MT 3000) and irradiated with an ultrasonic wave of about 28 kHz with an output of 60 W. Thereafter, it can be determined by obtaining a volume cumulative particle size distribution graph, and then obtaining the largest particle size.

A positive electrode for a lithium secondary battery of the present invention includes: a current collector; and an electrode active material layer located on the current collector, wherein the current collector includes a coated portion having an electrode active material layer formed on at least one surface thereof and a non-coated portion having no electrode active material layer formed on the current collector, and satisfies Equation (1) below:

$$\text{Equation (1) : } P \geq [(a1/a2) \times b]/0.05c$$

When a rolling density of the positive electrode, a particle size distribution of the particles included in the active material layer, and a thickness and an elongation of the current collector satisfy a relationship of a specific Equation (1), the current collector can have a specification enough to solve the problem of disconnection caused by the dimpling of active material particles into the current collector, thereby solving the problem of disconnection after electrode manufacturing. Accordingly, a problem of disconnection does not occur even after multiple charging and discharging operations are performed, and cracks in the active material can also be suppressed during long-term driving.

When a rolling density of the positive electrode, a particle size distribution of the particles included in the active material layer, and a thickness and an elongation of the current collector satisfy a relationship of a specific Equation (1), the camber phenomenon can be suppressed, thereby solving the problem of disconnection occurring during the manufacturing process.

Specifically, the wider the particle size distribution of the positive electrode active material, that is, the larger the difference between $D_{max}$ and $D_{50}$, the greater the packing density of the positive active material layer. Accordingly, in implementing the same rolling density of the electrode, physical damage to the positive electrode current collector can be reduced, thereby reducing the occurrence of cracks in the positive electrode during rolling.

However, when the particle size distribution is widened, the proportion of active materials having a large particle size increases, and thus disconnection of the current collector may increase due to the particle dimpling phenomenon of the active material. In order to improve this problem, the thickness of the positive electrode current collector must be increased, but when the thickness of the current collector increases, a space occupied by the active material layer inside the battery can decreases. When the active material layer decreases, there is a problem that an energy density of the lithium secondary battery decreases. Conversely, when the thickness of the positive electrode current collector is reduced, the rolling density must be lowered to prevent cracks from occurring in the positive electrode current collector. Therefore, as an absolute space inside the can decreases, the volume of the final active material layer decreases, thereby reducing the energy density of the lithium secondary battery.

On the other hand, as an elongation of the positive electrode current collector increases, a difference in elongation levels between a coated portion and a non-coated portion increases, thereby causing a problem that the swell of the electrode increases. If the elongation of the positive electrode current collector is reduced in order to improve this problem, there is a problem that cracks are generated in the current collector due to electrode volume expansion occurring during the charging/discharging process. This problem tends to be intensified when the particle size distribution is widened, and when the proportion of active materials having a large particle size increases.

Therefore, the thickness and elongation of the positive electrode current collector should be adjusted in consideration of the particle size distribution of the positive electrode active material and the rolling density of the positive electrode, and the present inventors have found that the relationship between these variables should satisfy Equation (1).

In the above Equation (1), P is a rolling density (g/cc) of the positive electrode. The rolling density of the positive electrode can be calculated using the loading amount of the positive electrode and the thickness of the positive electrode active material layer as shown in the equation of: rolling density (g/cm$^3$) = positive electrode loading amount (g/cm$^2$)/positive electrode active material layer thickness (cm). The P may be 3.2 g/cc to 3.8 g/cc, preferably 3.3 g/cc to 3.6 g/cc, and most preferably 3.4 g/cc to 3.5 g/cc.

In Equation (1) above, a1 is a $D_{50}$ ($\mu$m) of the positive electrode active material particles included in the positive electrode active material layer. The a1 may be 3.5 $\mu$m to 13.5 $\mu$m, preferably 3.6 $\mu$m to 13.0 $\mu$m, and most preferably 3.7 $\mu$m to 12.5 $\mu$m.

In Equation (1) above, a2 is a $D_{max}$ ($\mu$m) of the positive electrode active material particles included in the positive electrode active material layer. The a2 may be 10 $\mu$m to 30 $\mu$m, preferably 10.5 $\mu$m to 28.0 $\mu$m, and most preferably 11 $\mu$m to 26 $\mu$m.

In the above Equation (1), b is an elongation (%) of the positive electrode current collector at 25°C. The elongation of the current collector can be measured based on a speed of 20 mm/min using an Instron 5543 equipment.

The b may be 1.0% to 5.5%, preferably 1.3% to 5.0%, and most preferably 1.5% to 4.5%.

In Equation (1) above, c is a thickness ($\mu$m) of the positive electrode current collector. The c may be 10 $\mu$m to 20 $\mu$m, preferably 11 $\mu$m to 18 $\mu$m, and most preferably 12 $\mu$m to 17 $\mu$m.

The positive electrode for a lithium secondary battery of the present invention includes: a positive electrode current collector; and a positive electrode active material layer located on the positive electrode current collector, wherein the positive electrode current collector includes a coated portion having a positive electrode active material layer formed on at least one surface thereof and a non-coated portion having no positive electrode active material layer formed on the positive electrode current collector.

The positive electrode may have a structure in which a positive electrode active material layer is formed on one or both surfaces of a long sheet-shaped positive electrode current collector, wherein the positive electrode active material layer may include a positive electrode active material, a conductive material, and a binder.

Specifically, the positive electrode can be prepared by applying a positive electrode slurry to one or both surfaces of a long sheet-shaped positive electrode current collector, removing a solvent of the positive electrode slurry through a drying process, and then rolling the same, wherein the positive electrode slurry is prepared by dispersing a positive electrode active material, a conductive material, and a binder in a solvent such as dimethyl sulfoxide (DMSO), isopropyl alcohol, N-methyl pyrrolidone (NMP), acetone, water, etc. Meanwhile, the positive electrode including a non-coated portion may be prepared by not applying the positive electrode slurry to some region of the positive electrode current collector, for example, one end of the positive electrode current collector when the positive electrode slurry is applied.

As the positive electrode current collector, various positive electrode current collectors used in the art may be used. For example, the positive electrode current collector may be stainless steel, aluminum, nickel, titanium, fired carbon, or aluminum or stainless steel having a surface treated with carbon, nickel, titanium, silver, etc. The positive electrode current collector may have fine irregularities formed on the surface thereof to increase the adhesion of the positive electrode active material. For example, the positive electrode current collector may be used in various forms such as a film, a sheet, a foil, a net, a porous body, a foam, a non-woven fabric, or the like. Most preferably, a thin aluminum film may be used in terms of elongation control and the like.

Meanwhile, as the positive electrode active material, any positive electrode active materials generally used in the art may be used.

Preferably, the positive electrode active material may include a lithium nickel-based oxide, and specifically, may include a lithium nickel-based oxide containing 80% by mol or more of Ni based on the total number of moles of transition metals. Preferably, the lithium nickel-based oxide may contain Ni in an amount of 80% by mol or more and less than 100% by mol, 82 % by mol or more and less than 100% by mol, or 83 % by mol or more and less than 100% by mol. When the lithium nickel-based oxide having a high Ni content as described above is used, a high capacity can be realized.

More specifically, the positive electrode active material may include a lithium nickel-based oxide represented by the following Chemical Formula 2:

$$[\text{Chemical Formula 2}] \qquad Li_aNi_bCo_cM^1_dM^2_eO_2$$

In Chemical Formula 2, $M^1$ may be Mn, Al, or a combination thereof, and preferably Mn or Mn and Al.

The $M^2$ may be at least one selected from the group consisting of Zr, W, Y, Ba, Ca, Ti, Mg, Ta, and Nb, and preferably at least one selected from the group consisting of Zr, Y, Mg, and Ti, and more preferably Zr, Y, or a combination thereof. The $M^2$ element is not necessarily included, but when included in an appropriate amount, it can play a role in promoting grain growth during firing or improving crystal structure stability.

The a represents a molar ratio of lithium in the lithium nickel-based oxide, and may be $0.8 \leq a \leq 1.2$, $0.85 \leq a \leq 1.15$, or $0.9 \leq a \leq 1.2$. When the molar ratio of lithium satisfies the above range, the crystal structure of the lithium nickel-based oxide can be stably formed.

The b represents a molar ratio of nickel among all metals excluding lithium in the lithium nickel-based oxide, and may be $0.85 \leq b < 1$, $0.86 \leq b < 1$, or $0.88 \leq b < 1$. When the molar ratio of nickel satisfies the above range, a high energy density may be exhibited, thereby implementing a high capacity.

The c represents a molar ratio of cobalt among all metals excluding lithium in the lithium nickel-based oxide, and may be $0 < c < 0.15$, $0 < c < 0.14$, or $0.01 \leq c \leq 0.12$. When the molar ratio of cobalt satisfies the above range, good resistance characteristics and output characteristics can be realized.

The d represents a molar ratio of $M^1$ element among all metals excluding lithium in the lithium nickel-based oxide, and may be $0<d<0.15$, $0<d<0.14$, or $0.01\leq d\leq0.12$. When the molar ratio of the $M^1$ element satisfies the above range, the structural stability of the positive electrode active material is excellent.

The e represents a molar ratio of $M^2$ element among all metals excluding lithium in the lithium nickel-based oxide, and may be $0\leq e\leq0.1$, or $0\leq e\leq0.05$.

Meanwhile, the positive electrode active material according to the present invention may further include, if necessary, a coating layer containing one or more coating elements selected from the group consisting of Al, Ti, W, B, F, P, Mg, Ni, Co, Fe, Cr, V, Cu, Ca, Zn, Zr, Nb, Mo, Sr, Sb, Bi, Si and S on the surface of the lithium nickel-based oxide particles. Preferably, the coating element may be Al, B, Co, or a combination thereof, and most preferably, B.

When the coating layer is present on the surface of the lithium nickel-based oxide particle, the contact between the electrolyte and the lithium composite transition metal oxide can be suppressed by the coating layer, thereby having an effect of reducing transition metal elution or gas generation due to side reactions with the electrolyte.

The positive electrode active material may be included in an amount of 80 to 99% by weight, preferably 85 to 99% by weight, more preferably 90 to 99% by weight, based on the total weight of the positive electrode active material layer.

Meanwhile, the positive electrode active material according to the present invention may have a unimodal particle size distribution or a bimodal particle size distribution. By using the positive electrode active material having a unimodal distribution, an increase in resistance can be minimized. When a bimodal positive electrode active material is used by mixing a large-particle-diameter positive electrode active material having a large average particle diameter and a small-particle-diameter positive electrode active material having a small average particle diameter, an electrode density can be improved.

The positive electrode active material is not particularly limited in terms of its form, and may be in the form of a secondary particle in which a plurality of primary particles are aggregated, in the form of a single particle formed of one primary particle, or in the form of a combination thereof.

Preferably, the positive electrode active material may include a positive electrode active material composed of a single particle formed of one primary particle and/or a quasi-single particle that is an aggregate of 10 or less primary particles. By using, as the positive electrode active material, a positive electrode active material composed of a single particle formed of one primary particle and/or a quasi-single particle that is an aggregate of 10 or less primary particles, a large cylindrical battery having excellent safety while implementing a high capacity can be obtained.

Conventionally, it has been common to use a spherical secondary particle in which tens to hundreds of primary particles are aggregated as the positive electrode active material for a lithium secondary battery. However, in the case of a positive electrode active material in the form of a secondary particle in which a large number of primary particles are aggregated, there is a problem in that particle breakage, in which primary particles fall off, is likely to occur during the rolling process when manufacturing a positive electrode, and cracks occur inside the particles during the charging and discharging process. When the particle breakage of the positive electrode active material or cracks inside the particles are generated, the contact area with an electrolyte increases, thereby causing a problem that gas generation due to side reactions with the electrolyte is increased. If gas generation increases inside a cylindrical battery, the pressure inside the battery increases, leading to a risk of battery explosion. In particular, when the volume of the cylindrical battery is increased, the amount of active material inside the battery increases as the volume increases, and thus the amount of gas generated significantly is increased, thereby increasing the risk of firing and/or explosion of the battery.

**In** contrast, in the case of the positive electrode active material in the form of a single particle formed of one primary particle or a quasi-single particle in which 10 or less primary particles are aggregated, the particle breakage hardly occurs during rolling because the particle strength is higher compared to the conventional secondary particle-type positive electrode active materials in which tens to hundreds of primary particles are aggregated. **In** addition, in the case of a positive electrode active material in the form of a single particle or quasi-single particle, the number of primary particles constituting the particle is small, whereby there is little change in primary particles due to the volume expansion and contraction thereof during charging and discharging, and thus, the occurrence of cracks inside the particles is also significantly reduced.

Therefore, when the positive electrode active material formed of a single particle or quasi-single particle is used, the amount of gas generated due to particle breakage and internal crack can be significantly reduced, thereby implementing excellent safety even in a large cylindrical battery.

Meanwhile, the positive electrode active material formed of a single particle and/or quasi-single particle is preferably included in an amount of 95% to 100% by weight, preferably 98% to 100% by weight, more preferably 99% to 100% by weight, and even more preferably 100% by weight, based on the weight of the total positive electrode active material included in the positive electrode active material layer. When the content of the single particles and/or quasi-single particles satisfies the above range, sufficient safety can be obtained when applied to a large cylindrical battery.

Next, the conductive material is used to impart conductivity to the electrode, and may be any material without particular limitation as long as it has electroconductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, carbon fiber, and carbon nanotube; a powder or fiber of metal such as copper, nickel, aluminum, silver, etc.; a conductive whisker such as a zinc oxide whisker and a potassium titanate whisker; a conductive metal oxide such as a titanium oxide; or a conductive polymer such as a polyphenylene derivative, and any one or a mixture of two or more thereof may be used. The conductive material may usually be included in an amount of 1 to 30% by weight, preferably 1 to 20% by weight, more preferably 1 to 10% by weight, based on the total weight of the positive electrode active material layer.

The binder serves to improve the bonding between the positive electrode active material particles and the adhesion between the positive electrode active material and the positive electrode current collector. Specific examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and any one or a mixture of two or more thereof may be used. The binder may usually be included in an amount of 1 to 30% by weight, preferably 1 to 20% by weight, more preferably 1 to 10% by weight, based on the total weight of the positive electrode active material layer.

Meanwhile, if necessary, an insulating layer covering a part of the positive electrode active material layer and a part of the non-coated portion may be further formed on the positive electrode according to the present invention. The insulating layer may be formed along a direction parallel to the winding direction of the electrode assembly.

The lithium secondary battery according to the present invention may include: an electrode assembly in which the above positive electrode, a negative electrode, and a separator interposed between the positive electrode and the negative electrode is wound in one direction; an electrolyte; and a battery can accommodating the electrode assembly and the electrolyte.

Specifically, the positive electrode and the negative electrode may have a structure in which an active material layer is formed on a long sheet-shaped current collector, and may include a non-coated portion in which an active material layer is not formed on a partial region of the current collector.

When the positive electrode and the negative electrode including the non-coated portions as described above are used, a battery having a tap-less structure can be implemented in which a separate electrode tab is not provided, and at least a part of the non-coated portions of the positive electrode and the negative electrode define an electrode tab.

The negative electrode may have a structure in which a negative electrode active material layer is formed on one or both surfaces of a long sheet-shaped negative electrode current collector, wherein the negative electrode active material layer may include a negative electrode active material, a conductive material, and a binder.

Specifically, the negative electrode can be prepared by applying a negative electrode slurry to one or both surfaces of a long sheet-shaped negative electrode current collector, removing a solvent of the negative electrode slurry through a drying process, and then rolling the same, wherein the negative electrode slurry is prepared by dispersing a negative electrode active material, a conductive material, and a binder in a solvent such as dimethyl sulfoxide (DMSO), isopropyl alcohol, N-methyl pyrrolidone (NMP), acetone, water, etc. Meanwhile, the negative electrode including a non-coated portion may be prepared by not applying the negative electrode slurry to some region of the negative electrode current collector, for example, one end of the negative electrode current collector when the negative electrode slurry is applied.

As the negative electrode active material, a compound capable of reversible intercalation and de-intercalation of lithium may be used. Specific examples of the negative electrode active material may include carbonaceous materials such as artificial graphite, natural graphite, graphitized carbon fiber, amorphous carbon; silicon-based materials such as Si, Si-Me alloy (where Me is at least one selected from the group consisting of Al, Sn, Mg, Cu, Fe, Pb, Zn, Mn, Cr, Ti, and Ni), $SiO_y$ (where $0<y<2$), and Si-C composites; lithium metal thin films; metal materials capable of alloying with lithium, such as Sn and Al; any one or a mixture of two or more thereof may be used.

Preferably, the negative electrode according to the present invention may include a silicon-based negative electrode active material. The silicon-based negative electrode active material may be Si, Si-Me alloy (where Me is at least one selected from the group consisting of Al, Sn, Mg, Cu, Fe, Pb, Zn, Mn, Cr, Ti, and Ni), $SiO_y$ (here, $0<y<2$), Si-C composites, or a combination thereof, and preferably may be $SiO_y$ (here, $0<y<2$). Since the silicon-based negative electrode active material has a high theoretical capacity, capacity characteristics can be improved when the silicon-based negative electrode active material is included.

Meanwhile, the silicon-based negative electrode active material may be doped with $M^b$ metal, wherein the $M^b$ metal may be a group 1 metal element, or a group 2 metal element, and specifically, Li, Mg, etc. Specifically, the silicon negative electrode active material may be Si, $SiO_y$ (where $0<y<2$), Si-C composite, etc. doped with $M^b$ metal. In the case of a metal-doped silicon-based negative electrode active material, the active material capacity is somewhat reduced due to the doped element, but has high efficiency, and thus, a high energy density can be realized.

In addition, the silicon-based negative electrode active material may further include a carbon coating layer on the surface of the particle. In this case, the carbon coating amount may be 20% by weight or less, preferably 1 to 20% by weight

based on the total weight of the silicon-based negative electrode active material.

**In** addition, the negative electrode may further include a carbon-based negative electrode active material as a negative electrode active material, if necessary. The carbon-based negative electrode active material may be, for example, artificial graphite, natural graphite, graphitized carbon fiber, amorphous carbon, soft carbon, hard carbon, etc., but is not limited thereto.

Meanwhile, when a mixture of the silicon-based negative electrode active material and the carbon-based negative electrode active material is used as the negative electrode active material, a mixing ratio by weight of the silicon-based negative electrode active material and the carbon-based negative electrode active material may be 1:99 to 20:80, preferably 1:99 to 15:85, and more preferably 1:99 to 10:90.

The negative electrode active material may be included in an amount of 80 to 99% by weight, preferably 85 to 99% by weight, more preferably 90 to 99% by weight, based on the total weight of the negative electrode active material layer.

The negative electrode current collector may be any negative electrode current collector commonly used in the art, and may be, for example, copper, stainless steel, aluminum, nickel, titanium, fired carbon, copper or stainless steel that is surface-treated with carbon, nickel, titanium, silver, or the like, an aluminum-cadmium alloy, or the like. The negative electrode current collector may typically have a thickness of 3 to 500 $\mu$m, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

The conductive material is used to impart conductivity to the negative electrode, and may be any material without particular limitation as long as it has electroconductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, carbon fiber, and carbon nanotube; a powder or fiber of metal such as copper, nickel, aluminum, silver, etc.; a conductive whisker such as a zinc oxide whisker and a potassium titanate whisker; a conductive metal oxide such as a titanium oxide; or a conductive polymer such as a polyphenylene derivative, and any one or a mixture of two or more thereof may be used. The conductive material may usually be included in an amount of 1 to 30% by weight, preferably 1 to 20% by weight, more preferably 1 to 10% by weight, based on the total weight of the negative electrode active material layer.

The binder serves to improve the bonding between the negative electrode active material particles and the adhesion between the negative electrode active material and the negative electrode current collector. Specific examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and any one or a mixture of two or more thereof may be used. The binder may usually be included in an amount of 1 to 30% by weight, preferably 1 to 20% by weight, more preferably 1 to 10% by weight, based on the total weight of the negative electrode active material layer.

The separator is to separate the negative electrode and the positive electrode and to provide a passage for lithium ions to move, and any separator may be used without particular limitation as long as it is generally used as the separator in the lithium secondary battery. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used as the separator. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used.

Meanwhile, the non-coated portions of the positive electrode and the negative electrode may be processed in the form of a plurality of independently bendable segmental pieces, and at least a part of the plurality of segmental piece may be bent toward a winding center of the electrode assembly.

The segmental piece can be formed by processing the current collector of the positive electrode and the negative electrode through a metal foil cutting process such as laser notching, ultrasonic cutting, punching, and the like.

When the non-coated portions of the positive electrode and the negative electrode are processed in the form of a plurality of segmental piece, a stress applied to the non-coated portions during bending is reduced to prevent deformation or damage of the non-coated portions and to improve welding characteristics with the current collecting plate.

The current collecting plate and the non-coated portion are generally joined by welding, and the non-coated portion must be bent as flat as possible by applying a strong pressure to the welded region of the non-coated portion in order to improve the welding characteristics. However, during this bending process, the shape of the non-coated portion may be deformed by being irregularly distorted, and the deformed part may contact the opposite polar electrode to cause an internal short circuit or cause a fine crack in the non-coated portion. However, if the non-coated portions of the positive electrode and the negative electrode are processed in the form of a plurality of independently bendable segmental pieces, the stress applied to the non-coated portion during bending can be alleviated, thereby minimizing deformation and damage to the non-coated portion.

In addition, when the non-coated portion is processed in the form of the segmental piece as described above, overlapping occurs between the plurality of segmental pieces during bending, whereby the welding strength with the current collecting plate can be increased, and when the latest technology such as laser welding is used, it is possible to prevent a laser from penetrating into the electrode assembly and ablating the separator or the active material. Preferably, at least some of the plurality of bent segmental pieces may be overlapped on the upper and lower ends of the electrode assembly, and the current collecting plate may be coupled on the plurality of bent segmental pieces.

The lithium secondary battery according to the present invention may be a cylindrical lithium secondary battery. The cylindrical lithium secondary battery may be a large cylindrical battery having a form factor ratio (defined as a diameter of the cylindrical battery divided by its height, that is, a ratio of a diameter ($\Phi$) to a height (H)) of 0.4 or more. Here, the form factor refers to a value representing the diameter and height of the cylindrical battery.

The cylindrical battery according to the present invention may be, for example, a 46110 cell (diameter of 46 mm, height of 110 mm, form factor ratio of 0.418), a 4875 cell (diameter of 48 mm, height of 75 mm, form factor ratio of 0.640), a 48110 cell (diameter of 48 mm, height of 110 mm, form factor ratio of 0.436), a 4880 cell (diameter of 48 mm, height of 80 mm, form factor ratio of 0.600), a 4680 cell (diameter of 46 mm, height of 80 mm, form factor ratio of 0.575), a 4695 cell (diameter of 46 mm, height of 95 mm, form factor ratio of 0.484). In the figure representing the form factor, the first two numbers represent the diameter of the cell, and the next two or three numbers represent the height of the cell.

The cylindrical lithium secondary battery according to the present invention can significantly reduce the amount of gas generated compared to the prior art, and thus, can implement excellent safety even in a large cylindrical battery having a form factor ratio of 0.4 or more.

Meanwhile, the cylindrical battery according to the present invention is a battery having a tab-less structure that does not include an electrode tab. The cylindrical lithium secondary battery of the present invention may have a structure in which at least a part of the non-coated portion of the positive electrode defines an electrode tab, that is, a tap-less structure. In addition, the cylindrical lithium secondary battery of the present invention may have a structure in which at least a part of the non-coated portion of the negative electrode defines an electrode tab, that is, a tap-less structure. Specifically, the non-coated portion may be formed at one side end of the current collector to be elongated along the winding direction, and a battery having the tab-less structure can be implemented by coupling a current collecting plate to each of the positive electrode non-coated portion and the negative electrode non-coated portion and connecting the current collecting plate to an electrode terminal.

For example, the battery having a tap-less structure can be manufactured through the following method. First, a separator, a positive electrode, a separator, and a negative electrode are sequentially stacked so that the non-coated portions of the positive electrode and the negative electrode are located in opposite directions, and then wound in one direction to manufacture a jelly-roll type electrode assembly. Then, the non-coated portions of the positive electrode and the negative electrode are bent in a direction of the winding center; a current collecting plate is welded and joined to each of the non-coated portions of the positive electrode and the negative electrode; and then the current collecting plate is connected to an electrode terminal, thereby manufacturing the battery having a tap-less structure. Meanwhile, the current collecting plate has a larger cross-sectional area compared to a strip-type electrode tab, and resistance is inversely proportional to a cross-sectional area of a passage through which current flows. Therefore, when the secondary battery is formed with the above structure, the cell resistance can be greatly reduced. In addition, when a cylindrical lithium secondary battery is formed with the tap-less structure as described above, the current concentration is less compared to the conventional battery with electrode tabs, whereby heat generation inside the battery can be effectively reduced, and thus the thermal safety of the battery can be improved.

The battery can is electrically connected to the non-coated portion of the negative electrode and functions as a negative electrode terminal which contacts an external power source to transfer a current applied from the external power source to the negative electrode.

The electrolyte used in the cylindrical lithium secondary battery of the present invention may include a lithium salt, an organic solvent, and an additive.

The lithium salt is used as an electrolyte salt in the lithium secondary battery and as a medium for transferring ions. Typically, the lithium salt may contain, for example, $Li^+$ as a cation and at least one selected from the group consisting of $F^-$, $Cl^-$, $Br^-$, $I^-$, $NO_3^-$, $N(CN)_2^-$, $BF_4^-$, $ClO_4^-$, $B_{10}Cl_{10}^-$, $AlCl_4^-$, $AlO_2^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$ and $SCN^-$ as an anion.

Specifically, the lithium salt may include any one or a mixture of two or more selected from the group consisting of $LiCl$, $LiBr$, $LiI$, $LiBF_4$, $LiClO_4$, $LiB_{10}Cl_{10}$, $LiAlCl_4$, $LiAlO_2$, $LiPF_6$, $LiCF_3SO_3$, $LiCH_3CO_2$, $LiCF_3CO_2$, $LiAsF_6$, $LiSbF_6$, $LiCH_3SO_3$, $LiN(SO_2F)_2$ (lithium bis(fluorosulfonyl)imide; LiFSI), $LiN(SO_2CF_2CF_3)_2$ (lithium bis(perfluoroethanesulfonyl)imide; LiBETI), and $LiN(SO_2CF_3)_2$ (lithium bis(trifluomethanesulfonyl) imide; LiTFSI). In addition, any lithium salt commonly used in the electrolytes of lithium secondary batteries may be used without limitation.

The lithium salt may be included in the electrolyte at a concentration of 1.0 M to 1.5 M, preferably 1.1 M to 1.3 M, in order to realize optimal electrolyte impregnation for a large-capacity cylindrical lithium secondary battery. When the concentration of the lithium salt satisfies the above range, the effect of improving cycle characteristics is sufficient when the lithium secondary battery is stored at high temperatures, and the viscosity of the non-aqueous electrolyte may be appropriate, thereby improving electrolyte impregnation.

The organic solvent may include at least one organic solvent selected from the group consisting of a cyclic carbonate-based organic solvent, a linear carbonate-based organic solvent, a linear ester-based organic solvent, and a cyclic ester-based organic solvent.

Specifically, the organic solvent may include a cyclic carbonate-based organic solvent, a linear carbonate-based organic solvent, or a mixed organic solvent thereof.

The cyclic carbonate-based organic solvent is a high-viscosity organic solvent that has a high dielectric constant and thus can easily dissociate the lithium salt in the electrolyte, and as specific examples thereof, may include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and particularly, may include ethylene carbonate.

The cyclic carbonate, for example ethylene carbonate, may be included in an amount of 15 to 30% by volume, preferably 15 to 25% by volume, and most preferably 15 to 20% by volume based on the total volume of the organic solvent. When the ethylene carbonate is included in the above range, an optimized electrolyte can be provided in terms of viscosity and performance.

In addition, the linear carbonate-based organic solvent is an organic solvent having a low viscosity and a low dielectric constant, and as representative examples thereof, may include at least one organic solvent selected from the group consisting of dimethyl carbonate (DMC), diethyl carbonate (DEC), dipropyl carbonate, ethyl methyl carbonate (EMC), methyl propyl carbonate, and ethyl propyl carbonate, and specifically, ethyl methyl carbonate (EMC).

The linear carbonate, for example ethyl methyl carbonate, may be included in an amount of 15 to 30% by volume, preferably 15 to 25% by volume, and most preferably 15 to 20% by volume based on the total volume of the organic solvent. When the ethyl methyl carbonate is included in the above range, an optimized electrolyte can be provided in terms of viscosity and performance.

It is preferable that the organic solvent contained in the electrolyte of the present invention includes ethylene carbonate (EC) and ethyl methyl carbonate (EMC), and contains ethylene carbonate (EC) and ethyl methyl carbonate (EMC) in an amount of 25% by volume or less based on the total volume of the organic solvent. In this case, since the impregnation of the electrolyte becomes appropriate, optimal performance can be provided when the range of the injection fraction of the present invention is applied.

In addition, in order to produce an electrolyte having a high ion conductivity, the organic solvent may further include at least one ester-based organic solvent selected from the group consisting of a linear ester-based organic solvent and a cyclic ester-based organic solvent in addition to at least one carbonate-based organic solvent selected from the group consisting of the cyclic carbonate-based organic solvent and the linear carbonate-based organic solvent.

Specific examples of such linear ester-based organic solvents may include at least one organic solvent selected from the group consisting of methyl acetate, ethyl acetate, propyl acetate, methyl propionate, ethyl propionate, propyl propionate, and butyl propionate.

In addition, the cyclic ester-based organic solvent may include at least one organic solvent selected from the group consisting of γ-butyrolactone, γ-valerolactone, γ-caprolactone, σ-valerolactone, and ε-caprolactone.

Meanwhile, the organic solvent may be used by adding, without limitation, an organic solvent commonly used in a non-aqueous electrolyte as needed. For example, at least one organic solvent of an ether-based organic solvent, a glyme-based solvent, and a nitrile-based organic solvent may be further included.

The ether-based solvent may be anyone selected from the group consisting of dimethyl ether, diethyl ether, dipropyl ether, methyl ethyl ether, methyl propyl ether, ethyl propyl ether, 1,3-dioxolane (DOL), and 2,2-bis(trifluoromethyl)-1,3-dioxolane (TFDOL), or a mixture of two or more thereof, but is not limited thereto.

The glyme-based solvent is a solvent having a higher dielectric constant and a lower surface tension than a linear carbonate-based organic solvent and having less reactivity with metal, and may include at least one selected from the group consisting of dimethoxyethane (glyme, DME), diethoxyethane, diglyme, tri-glyme, and tetra-glyme (TEGDME), but is not limited thereto.

The nitrile-based solvent may be at least one selected from the group consisting of acetonitrile, propionitrile, butyronitrile, valeronitrile, caprylonitrile, heptanitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

The non-aqueous electrolyte of the present invention may include an electrolyte additive in order to prevent the non-aqueous electrolyte from decomposing in a high-power environment to cause negative electrode collapse, or in order to further improve low-temperature high-rate discharge characteristics, high-temperature stability, overcharge prevention, and effect of battery expansion inhibition at high temperatures, etc.

The electrolyte additive may include, as representative examples thereof, at least one additive for forming an SEI film selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

The cyclic carbonate-based compound may be a vinylene carbonate (VC) or a vinyl ethylene carbonate.

The halogen-substituted carbonate-based compound may be a fluoroethylene carbonate (FEC).

The sultone-based compound may be at least one compound selected from the group consisting of 1,3-propane sultone (PS), 1,4-butane sultone, ethene sultone, 1,3-propene sultone (PRS), 1,4-butene sultone, and 1-methyl-1,3-propene sultone.

The sulfate-based compound may be ethylene sulfate (Esa), trimethylene sulfate (TMS), or methyl trimethylene sulfate (MTMS).

The phosphate-based compound may be at least one compound selected from the group consisting of lithium difluoro(bisoxalato) phosphate, lithium difluorophosphate, tris(trimethylsilyl) phosphate, tris(trimethyl silyl) phosphite, tris(2,2,2-trifluoroethyl) phosphate, and tris(2,2,2-trifluoroethyl) phosphite.

The borate-based compound may be tetraphenyl borate, lithium oxalyl difluoroborate (LiODFB), and lithium bisoxalatoborate ($LiB(C_2O_4)_2$, LiBOB).

The nitrile-based compound may be at least one compound selected from the group consisting of succinonitrile, adiponitrile, acetonitrile, propionitrile, butyronitrile, valeronitrile, caprylonitrile, heptanitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may include fluorobenzene, the amine-based compound may include triethanolamine or ethylene diamine, and the silane-based compound may include tetravinylsilane.

The lithium salt-based compound is different from the lithium salt included in the non-aqueous electrolyte, and may include lithium difluorophosphate (LiDFP), $LiPO_2F_2$ or $LiBF_4$.

Meanwhile, the other electrolyte additives may be used as a mixture of two or more, and may be included in an amount of 0.01 to 30% by weight, specifically 0.1 to 25% by weight, and preferably 1 to 20% by weight, based on the total weight of the non-aqueous electrolyte. When the content of the other electrolyte additives above satisfies the above range, the effect of improving ion conductivity and cycle characteristics is more excellent.

Hereinafter, the present invention will be described in more detail by way of specific examples.

## EXAMPLES

### Example 1

A positive electrode slurry was prepared by mixing an positive electrode active material of $Li[Ni_{0.9}Co_{0.06}Mn_{0.03}Al_{0.01}]O_2$, a carbon nanotube, and a PVDF binder at a weight ratio of 97.8:0.6:1.6 in N-methyl pyrrolidone, wherein the positive electrode active material has a bimodal particle size distribution with $D_{50}$ of 8.3 $\mu$m and $D_{max}$ of 18.0 $\mu$m, and is in the form of a secondary particle. The positive electrode slurry was applied to one surface of an aluminum current collector sheet having a thickness of 15.0 $\mu$m and an elongation of 2.3% at 25°C, dried at 120°C, and rolled to prepare a positive electrode. The rolling density P of the prepared positive electrode was 3.41 g/cc.

A negative electrode active material (graphite: SiO=95:5 weight ratio mixture), a conductive material (super C), styrene-butadiene rubber (SBR), and carboxymethyl cellulose (CMC) were mixed in water at a weight ratio of 96:2:1.5:0.5 to prepare a negative electrode slurry. The negative electrode slurry was applied to one surface of a copper current collector sheet, dried at 150°C, and rolled to prepare a negative electrode.

A separator was interposed between the positive electrode and the negative electrode prepared as described above, which were stacked in the order of separator/positive electrode/separator/negative electrode, and then wound to prepare a jelly-roll type electrode assembly. The electrode assembly prepared as described above was inserted into a cylindrical battery can, and then an electrolyte was injected to prepare a 4680 cell.

### Example 2

A positive electrode slurry was prepared by mixing an positive electrode active material of $Li[Ni_{0.9}Co_{0.06}Mn_{0.03}Al_{0.01}]O_2$, a carbon nanotube, and a PVDF binder at a weight ratio of 97.8:0.6:1.6 in N-methyl pyrrolidone, wherein the positive electrode active material has a unimodal particle size distribution with $D_{50}$ of 4.3 $\mu$m and $D_{max}$ of 13.7 $\mu$m, and is in the form of a single particle. The positive electrode slurry was applied to one surface of an aluminum current collector sheet having a thickness of 10.0 $\mu$m and an elongation of 3.4% at 25°C, dried at 120°C, and rolled to prepare a positive electrode. The rolling density P of the prepared positive electrode was 3.63 g/cc.

A 4680 cell was manufactured in the same manner as in Example 1, except that the positive electrode was used.

**Example 3**

A positive electrode slurry was prepared by mixing an positive electrode active material of $Li[Ni_{0.9}Co_{0.06}Mn_{0.03}Al_{0.01}]O_2$, a carbon nanotube, and a PVDF binder at a weight ratio of 97.8:0.6:1.6 in N-methyl pyrrolidone, wherein the positive electrode active material has a bimodal particle size distribution with $D_{50}$ of 12.4 $\mu$m and $D_{max}$ of 27.0 $\mu$m, and is in the form of a secondary particle. The positive electrode slurry was applied to one surface of an aluminum current collector sheet having a thickness of 12.0 $\mu$m and an elongation of 4.1% at 25°C, dried at 120°C, and rolled to prepare a positive electrode. The rolling density P of the prepared positive electrode was 3.28 g/cc.

A 4680 cell was manufactured in the same manner as in Example 1, except that the positive electrode was used.

**Example 4**

A positive electrode slurry was prepared by mixing an positive electrode active material of $Li[Ni_{0.9}Co_{0.06}Mn_{0.03}Al_{0.01}]O_2$, a carbon nanotube, and a PVDF binder at a weight ratio of 97.8:0.6:1.6 in N-methyl pyrrolidone, wherein the positive electrode active material has a bimodal particle size distribution with $D_{50}$ of 5.5 $\mu$m and $D_{max}$ of 15.0 $\mu$m, and is in the form of a secondary particle. The positive electrode slurry was applied to one surface of an aluminum current collector sheet having a thickness of 15.0 $\mu$m and an elongation of 4.6% at 25°C, dried at 120°C, and rolled to prepare a positive electrode. The rolling density P of the prepared positive electrode was 3.59 g/cc.

A 4680 cell was manufactured in the same manner as in Example 1, except that the positive electrode was used.

**Example 5**

A positive electrode slurry was prepared by mixing an positive electrode active material of $Li[Ni_{0.9}Co_{0.06}Mn_{0.03}Al_{0.01}]O_2$, a carbon nanotube, and a PVDF binder at a weight ratio of 97.8:0.6:1.6 in N-methyl pyrrolidone, wherein the positive electrode active material has a bimodal particle size distribution with $D_{50}$ of 9.1 $\mu$m and $D_{max}$ of 24.0 $\mu$m, and is in the form of a secondary particle. The positive electrode slurry was applied to one surface of an aluminum current collector sheet having a thickness of 12.0 $\mu$m and an elongation of 4.7% at 25°C, dried at 120°C, and rolled to prepare a positive electrode. The rolling density P of the prepared positive electrode was 3.38 g/cc.

A 4680 cell was manufactured in the same manner as in Example 1, except that the positive electrode was used.

**Comparative Example 1**

A positive electrode slurry was prepared by mixing an positive electrode active material of $Li[Ni_{0.9}Co_{0.06}Mn_{0.03}Al_{0.01}]O_2$, a carbon nanotube, and a PVDF binder at a weight ratio of 97.8:0.6:1.6 in N-methyl pyrrolidone, wherein the positive electrode active material has a bimodal particle size distribution with $D_{50}$ of 8.4 $\mu$m and $D_{max}$ of 20.0 $\mu$m, and is in the form of a secondary particle. The positive electrode slurry was applied to one surface of an aluminum current collector sheet having a thickness of 10.0 $\mu$m and an elongation of 4.5% at 25°C, dried at 120°C, and rolled to prepare a positive electrode. The rolling density P of the prepared positive electrode was 3.58 g/cc.

A 4680 cell was manufactured in the same manner as in Example 1, except that the positive electrode was used.

**Comparative Example 2**

A positive electrode slurry was prepared by mixing an positive electrode active material of $Li[Ni_{0.9}Co_{0.06}Mn_{0.03}Al_{0.01}]O_2$, a carbon nanotube, and a PVDF binder at a weight ratio of 97.8:0.6:1.6 in N-methyl pyrrolidone, wherein the positive electrode active material has a unimodal particle size distribution with $D_{50}$ of 4.5 $\mu$m and $D_{max}$ of 11.1 $\mu$m, and is in the form of a single particle. The positive electrode slurry was applied to one surface of an aluminum current collector sheet having a thickness of 12.0 $\mu$m and an elongation of 5.5% at 25°C, dried at 120°C, and rolled to prepare a positive electrode. The rolling density P of the prepared positive electrode was 3.63 g/cc.

A 4680 cell was manufactured in the same manner as in Example 1, except that the positive electrode was used.

**Comparative Example 3**

A positive electrode slurry was prepared by mixing an positive electrode active material of $Li[Ni_{0.9}Co_{0.06}Mn_{0.03}Al_{0.01}]O_2$, a carbon nanotube, and a PVDF binder at a weight ratio of 97.8:0.6:1.6 in N-methyl pyrrolidone, wherein the positive electrode active material has a bimodal particle size distribution with $D_{50}$ of 12.9 $\mu$m and $D_{max}$ of 23.0 $\mu$m, and is in the form of a secondary particle. The positive electrode slurry was applied to one surface of an aluminum current collector sheet having a thickness of 12.0 $\mu$m and an elongation of 3.8% at 25°C, dried at 120°C, and rolled to prepare a positive electrode. The rolling density P of the prepared positive electrode was 3.48 g/cc.

A 4680 cell was manufactured in the same manner as in Example 1, except that the positive electrode was used.

**Comparative Example 4**

A positive electrode slurry was prepared by mixing an positive electrode active material of $Li[Ni_{0.9}Co_{0.06}Mn_{0.03}Al_{0.01}]O_2$, a carbon nanotube, and a PVDF binder at a weight ratio of 97.8:0.6:1.6 in N-methyl pyrrolidone, wherein the positive electrode active material has a bimodal particle size distribution with $D_{50}$ of 10.4 $\mu$m and $D_{max}$ of 21.0 $\mu$m, and is in the form of a secondary particle. The positive electrode slurry was applied to one surface of an aluminum current collector sheet having a thickness of 10.0 $\mu$m and an elongation of 3.6% at 25°C, dried at 120°C, and rolled to prepare a positive electrode. The rolling density P of the prepared positive electrode was 3.53 g/cc.

A 4680 cell was manufactured in the same manner as in Example 1, except that the positive electrode was used.

**Experimental Example 1**

For the 4680 cells of Examples 1 to 5 and Comparative Examples 1 to 4, it was confirmed whether disconnection occurred during the cell assembly process.

[Table 1]

|  | $[(a1/a2)\times b]/0.05c$ | P (rolling density, g/cc) | Whether disconnection occurred |
|---|---|---|---|
| Example 1 | 1.41 | 3.41 | X |
| Example 2 | 2.13 | 3.63 | X |
| Example 3 | 3.14 | 3.28 | X |
| Example 4 | 2.25 | 3.59 | X |
| Example 5 | 2.97 | 3.38 | X |
| Comparative Example 1 | 3.79 | 3.58 | O |
| Comparative Example 2 | 3.71 | 3.63 | O |
| Comparative Example 3 | 3.55 | 3.48 | X |
| Comparative Example 4 | 3.56 | 3.53 | O |

**Experimental Example 2**

For the 4680 cells of Examples 1 to 5 and Comparative Examples 1 to 4, it was confirmed whether disconnection occurred during charging and discharging.

Specifically, for each of the 4680 cells of Examples 1 to 5 and Comparative Examples 1 and 2, 300 cycles of charging and discharging were performed in which one cycle consists of charging up to 4.25V at a constant current-constant voltage of 1C at 25°C and discharging up to 2.5V at a constant current of 1C, and then it was confirmed whether disconnection occurred. The results are shown in Table 2 below.

[Table 2]

|  | Whether disconnection occurred |
|---|---|
| Example 1 | X |
| Example 2 | X |
| Example 3 | X |
| Example 4 | X |
| Example 5 | X |
| Comparative Example 1 | O |

(continued)

|  | Whether disconnection occurred |
|---|---|
| Comparative Example 2 | X |
| Comparative Example 3 | O |
| Comparative Example 4 | O |

As shown in Tables 1 and 2, in the case of the 4680 cells of Examples 1 to 5 in which the value of rolling density P was greater than or equal to the value of $[(a1/a2)\times b]/0.05c$, disconnection did not occur during the assembly process or during charging/discharging, whereas in the case of the 4680 cells of Comparative Examples 1 to 4 in which the value of rolling density P was less than the value of $[(a1/a2)\times b]/0.05c$, disconnection occurred during the assembly process or during charging/discharging.

## Claims

1. A positive electrode for a lithium secondary battery including:

   a positive electrode current collector; and a positive electrode active material layer located on the positive electrode current collector,
   wherein the positive electrode current collector includes a coated portion having a positive electrode active material layer formed on at least one surface thereof and a non-coated portion having no positive electrode active material layer formed on the positive electrode current collector, and satisfies Equation (1) below:

$$\text{Equation (1)} : P \geq [(a1/a2)\times b]/0.05c$$

   Wherein:

   P is a rolling density (g/cc) of the positive electrode,
   a1 is a $D_{50}$ ($\mu$m) of positive electrode active material particles included in the positive electrode active material layer,
   a2 is a $D_{max}$ ($\mu$m) of positive electrode active material particles included in the positive electrode active material layer,
   b is an elongation (%) of the positive electrode current collector at 25°C, and
   c is a thickness ($\mu$m) of the positive electrode current collector.

2. The positive electrode for a lithium secondary battery according to claim 1, wherein the P is 3.2 g/cc to 3.8 g/cc.

3. The positive electrode for a lithium secondary battery according to claim 1, wherein the a1 is 3.5 $\mu$m to 13.5 $\mu$m.

4. The positive electrode for a lithium secondary battery according to claim 1, wherein the a2 is 10 $\mu$m to 30 $\mu$m.

5. The positive electrode for a lithium secondary battery according to claim 1, wherein the b is 10 $\mu$m to 20 $\mu$m.

6. The positive electrode for a lithium secondary battery according to claim 1, wherein the c is 1.0% to 5.5%.

7. The positive electrode for a lithium secondary battery according to claim 1, wherein the positive electrode current collector is a thin aluminum film.

8. The positive electrode for a lithium secondary battery according to claim 1, wherein the positive electrode active material is a lithium nickel-based oxide represented by the following Chemical Formula 2:

   [Chemical Formula 2]        $Li_aNi_bCo_cM^1_dM^2_eO_2$

   wherein $M^1$ is Mn, Al, or a combination thereof, $M^2$ is at least one selected from the group consisting of Zr, W, Y, Ba, Ca, Ti, Mg, Ta, and Nb, and $0.8 \leq a \leq 1.2$, $0.8 \leq b < 1$, $0 < c < 0.2$, $0 < d < 0.2$, $0 \leq e \leq 0.1$.

9. The positive electrode according to claim 1, wherein the positive electrode active material has a bimodal particle size distribution.

10. The positive electrode according to claim 1, wherein the positive electrode active material has a unimodal particle size distribution.

11. A lithium secondary battery including: an electrode assembly in which the positive electrode for a lithium secondary battery of claim 1, a negative electrode, and a separator interposed between the positive electrode and the negative electrode is wound in one direction; an electrolyte; and a battery can accommodating the electrode assembly and the electrolyte.

12. The lithium secondary battery according to claim 11, wherein the lithium secondary battery is cylindrical.

13. The lithium secondary battery according to claim 12, wherein the cylindrical lithium secondary battery has a form factor ratio of 0.4 or more.

14. The lithium secondary battery according to claim 11, wherein the lithium secondary battery has a structure in which at least a part of the non-coated portion of the positive electrode defines an electrode tab.

## INTERNATIONAL SEARCH REPORT

| International application No. |
|---|
| **PCT/KR2023/021141** |

### A. CLASSIFICATION OF SUBJECT MATTER

**H01M 4/131**(2010.01)i; **H01M 4/66**(2006.01)i; **H01M 4/525**(2010.01)i; **H01M 4/505**(2010.01)i; **H01M 10/052**(2010.01)i; **H01M 50/107**(2021.01)i; **H01M 4/04**(2006.01)i; **H01M 4/1391**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/131(2010.01); H01M 10/05(2010.01); H01M 10/052(2010.01); H01M 10/0525(2010.01); H01M 4/13(2010.01); H01M 4/1391(2010.01); H01M 4/505(2010.01); H01M 50/107(2021.01); H01M 50/533(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 양극(cathode), 집전체(current collector), 활물질(active material), 유지부(coating portion), 무지부(non-coating portion), 압연밀도(rolling density), 입경 (diameter), 연신율(elongation), 두께(thickness)

### C. DOCUMENTS CONSIDERED TO BE RELEVANT

| Category* | Citation of document, with indication, where appropriate, of the relevant passages | Relevant to claim No. |
|---|---|---|
| Y | KR 10-2009-0019734 A (HITACHI MAXELL, LTD.) 25 February 2009 (2009-02-25)<br>See claim 1; and paragraphs [0003], [0018], [0057]-[0058] and [0067]-[0069]. | 1-14 |
| Y | KR 10-2446797 B1 (LG ENERGY SOLUTION, LTD.) 26 September 2022 (2022-09-26)<br>See claims 120 and 209; and paragraphs [0213]-[0216], [0479] and [0536]-[0537]. | 1-14 |
| A | KR 10-2018-0122238 A (LG CHEM, LTD.) 12 November 2018 (2018-11-12)<br>See entire document. | 1-14 |
| A | KR 10-2204939 B1 (LG CHEM, LTD.) 19 January 2021 (2021-01-19)<br>See entire document. | 1-14 |
| A | KR 10-2022-0080295 A (SK ON CO., LTD.) 14 June 2022 (2022-06-14)<br>See entire document. | 1-14 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 April 2024** | **01 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/021141**

| Patent document cited in search report | | | Publication date (day/month/year) | Patent family member(s) | | | Publication date (day/month/year) |
|---|---|---|---|---|---|---|---|
| KR | 10-2009-0019734 | A | 25 February 2009 | CN | 101373850 | A | 25 February 2009 |
| | | | | CN | 101373850 | B | 09 November 2011 |
| | | | | JP | 2009-048876 | A | 05 March 2009 |
| | | | | JP | 5258228 | B2 | 07 August 2013 |
| | | | | KR | 10-1452875 | B1 | 21 October 2014 |
| KR | 10-2446797 | B1 | 26 September 2022 | CN | 114824413 | A | 29 July 2022 |
| | | | | CN | 114864857 | A | 05 August 2022 |
| | | | | CN | 114864956 | A | 05 August 2022 |
| | | | | CN | 114865053 | A | 05 August 2022 |
| | | | | CN | 114865054 | A | 05 August 2022 |
| | | | | CN | 114865174 | A | 05 August 2022 |
| | | | | CN | 114865242 | A | 05 August 2022 |
| | | | | CN | 115000339 | A | 02 September 2022 |
| | | | | CN | 217239510 | U | 19 August 2022 |
| | | | | CN | 217239523 | U | 19 August 2022 |
| | | | | CN | 217239536 | U | 19 August 2022 |
| | | | | CN | 217239587 | U | 19 August 2022 |
| | | | | CN | 217655909 | U | 25 October 2022 |
| | | | | CN | 217655927 | U | 25 October 2022 |
| | | | | CN | 217740748 | U | 04 November 2022 |
| | | | | CN | 218182246 | U | 30 December 2022 |
| | | | | EP | 4044332 | A2 | 17 August 2022 |
| | | | | EP | 4044332 | A3 | 07 September 2022 |
| | | | | EP | 4044334 | A2 | 17 August 2022 |
| | | | | EP | 4044334 | A3 | 31 August 2022 |
| | | | | EP | 4044336 | A2 | 17 August 2022 |
| | | | | EP | 4044336 | A3 | 31 August 2022 |
| | | | | EP | 4044358 | A2 | 17 August 2022 |
| | | | | EP | 4044358 | A3 | 31 August 2022 |
| | | | | EP | 4047702 | A1 | 24 August 2022 |
| | | | | EP | 4047703 | A2 | 24 August 2022 |
| | | | | EP | 4047703 | A3 | 07 September 2022 |
| | | | | EP | 4047703 | B1 | 03 January 2024 |
| | | | | EP | 4047725 | A2 | 24 August 2022 |
| | | | | EP | 4047725 | A3 | 31 August 2022 |
| | | | | EP | 4047725 | B1 | 10 January 2024 |
| | | | | EP | 4228082 | A2 | 16 August 2023 |
| | | | | EP | 4239784 | A2 | 06 September 2023 |
| | | | | EP | 4243195 | A2 | 13 September 2023 |
| | | | | EP | 4250469 | A2 | 27 September 2023 |
| | | | | EP | 4311013 | A2 | 24 January 2024 |
| | | | | EP | 4311013 | A3 | 21 February 2024 |
| | | | | EP | 4312301 | A2 | 31 January 2024 |
| | | | | JP | 2023-549148 | A | 22 November 2023 |
| | | | | JP | 2023-549378 | A | 24 November 2023 |
| | | | | JP | 2023-549770 | A | 29 November 2023 |
| | | | | JP | 2023-550338 | A | 01 December 2023 |
| | | | | JP | 2023-551123 | A | 07 December 2023 |
| | | | | JP | 2023-551128 | A | 07 December 2023 |
| | | | | JP | 2024-500131 | A | 04 January 2024 |

Form PCT/ISA/210 (patent family annex) (July 2022)

## INTERNATIONAL SEARCH REPORT
### Information on patent family members

| | International application No. |
|---|---|
| | **PCT/KR2023/021141** |

| Patent document cited in search report | Publication date (day/month/year) | Patent family member(s) | | Publication date (day/month/year) |
|---|---|---|---|---|
| | | JP 2024-501458 | A | 12 January 2024 |
| | | KR 10-2022-0105141 | A | 26 July 2022 |
| | | KR 10-2022-0105142 | A | 26 July 2022 |
| | | KR 10-2022-0105143 | A | 26 July 2022 |
| | | KR 10-2022-0105144 | A | 26 July 2022 |
| | | KR 10-2022-0105145 | A | 26 July 2022 |
| | | KR 10-2022-0105146 | A | 26 July 2022 |
| | | KR 10-2022-0105147 | A | 26 July 2022 |
| | | KR 10-2022-0105148 | A | 26 July 2022 |
| | | KR 10-2022-0107131 | A | 02 August 2022 |
| | | KR 10-2022-0107132 | A | 02 August 2022 |
| | | KR 10-2022-0107133 | A | 02 August 2022 |
| | | KR 10-2022-0108011 | A | 02 August 2022 |
| | | KR 10-2022-0108012 | A | 02 August 2022 |
| | | KR 10-2022-0113329 | A | 12 August 2022 |
| | | KR 10-2022-0113654 | A | 16 August 2022 |
| | | KR 10-2022-0123354 | A | 06 September 2022 |
| | | KR 10-2437061 | B1 | 26 August 2022 |
| | | KR 10-2438158 | B1 | 30 August 2022 |
| | | KR 10-2444337 | B1 | 16 September 2022 |
| | | KR 10-2446351 | B1 | 22 September 2022 |
| | | KR 10-2448822 | B1 | 29 September 2022 |
| | | KR 10-2448987 | B1 | 29 September 2022 |
| | | KR 10-2448988 | B1 | 29 September 2022 |
| | | US 2022-0231345 | A1 | 21 July 2022 |
| | | US 2023-0246244 | A1 | 03 August 2023 |
| | | US 2024-0021958 | A1 | 18 January 2024 |
| | | WO 2022-158857 | A2 | 28 July 2022 |
| | | WO 2022-158857 | A3 | 15 September 2022 |
| | | WO 2022-158858 | A2 | 28 July 2022 |
| | | WO 2022-158858 | A3 | 15 September 2022 |
| | | WO 2022-158859 | A2 | 28 July 2022 |
| | | WO 2022-158859 | A3 | 15 September 2022 |
| | | WO 2022-158860 | A2 | 28 July 2022 |
| | | WO 2022-158860 | A3 | 15 September 2022 |
| | | WO 2022-158861 | A2 | 28 July 2022 |
| | | WO 2022-158861 | A3 | 15 September 2022 |
| | | WO 2022-158862 | A2 | 28 July 2022 |
| | | WO 2022-158862 | A3 | 15 September 2022 |
| | | WO 2022-158863 | A2 | 28 July 2022 |
| | | WO 2022-158863 | A3 | 15 September 2022 |
| | | WO 2022-158864 | A2 | 28 July 2022 |
| | | WO 2022-158864 | A3 | 15 September 2022 |
| KR 10-2018-0122238 A | 12 November 2018 | KR 10-2158680 | B1 | 22 September 2020 |
| | | US 10720634 | B2 | 21 July 2020 |
| | | US 2018-0323423 | A1 | 08 November 2018 |
| KR 10-2204939 B1 | 19 January 2021 | KR 10-2019-0129615 | A | 20 November 2019 |
| KR 10-2022-0080295 A | 14 June 2022 | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220179921